# EUROPEAN PATENT APPLICATION

(11) **EP 4 711 737 A1**
(43) Date of publication of application: **18.03.2026**
(21) Application number: 23937408.5
(22) Date of filing: 12.05.2023
(51) Int. Cl.: G01M 99/00, G01J 5/48, G01M 15/00

(54) **PROGRAM, DIAGNOSTIC METHOD, AND DIAGNOSTIC DEVICE**

(71) Applicant: Mitsui E&S DU Co., Ltd., Aioi-shi, Hyogo 678-0041 (JP)
(72) Inventor: FUJII, Takashi, Aioi-shi, Hyogo 678-0041 (JP); INOUE, Yuhei, Aioi-shi, Hyogo 678-0041 (JP)
(74) Representative: TBK
(86) International application number: PCT/JP2023/017988
(87) International publication number: WO 2024/236662

(57) **Abstract**

Provided are a program, a diagnostic method, and a diagnostic device, in which a computer performs first processing of setting a plurality of regions in a temperature image showing a temperature distribution of a device, second processing of identifying a change in a first correlation which is a correlation of a first feature amount relating to temperature between regions that are different from each other, and third processing of performing an abnormality diagnosis of the device based on the change in the first correlation.

## Description

### Technical Field

The present disclosure relates to a program, a diagnostic method, and a diagnostic device.

### Background Art

An abnormality diagnosis, which is a diagnosis for detecting an abnormality in various types of devices, is widely performed. An example of the abnormality diagnosis is a diagnosis for determining, for example, the presence or absence of an abnormality by focusing on temperature of the device. For example, as disclosed in Patent Literature 1, there has been proposed a technology of performing an abnormality diagnosis based on a temperature image, which shows a temperature distribution of the device, captured by an infrared camera.

### Citation List

### Patent Literature

Patent Literature 1: JP 2021-181286 A

### Summary

### Technical Problem

As described above, there have been proposed several technologies relating to an abnormality diagnosis focusing on temperature of a device, but a new proposal relating to a technology for more accurately diagnosing an abnormality in a device is desired.

The present disclosure has been made in view of the above-mentioned problem, and has an object to provide a program, a diagnostic method, and a diagnostic device with it is possible to accurately diagnose an abnormality in a device.

### Solution to Problem

In order to solve the above-mentioned problem, according to one aspect of the present disclosure, there is provided a program for causing a computer to perform: first processing of setting a plurality of regions in a temperature image showing a temperature distribution of a device; second processing of identifying a change in a first correlation which is a correlation of a first feature amount relating to temperature between regions that are different from each other; and third processing of performing an abnormality diagnosis of the device based on the change in the first correlation.

The first feature amount may include a plurality of types of feature amounts, the second processing may include further identifying, in addition to the change in the first correlation, a change in a second correlation which is a correlation between different types of the first feature amount of the same region or a correlation between different types of the first feature amount each corresponding to a different region, and the third processing may include performing the abnormality diagnosis based on the change in the second correlation in addition to the change in the first correlation.

The second processing may include further identifying, in addition to the change in the first correlation, a change in a third correlation which is a correlation between the first feature amount and a second feature amount that is independent of the region, and the third processing may include performing the abnormality diagnosis based on the change in the third correlation in addition to the change in the first correlation.

The second feature amount may include a feature amount relating to an operation state of the device.

The second feature amount may include a feature amount relating to input and output of heat to and from the device.

The first processing may include setting a plurality of the regions in the temperature image based on a visible light image in which the device is shown.

In order to solve the above-mentioned problem, according to one aspect of the present disclosure, there is provided a diagnostic method including performing, by a computer: first processing of setting a plurality of regions in a temperature image showing a temperature distribution of a device; second processing of identifying a change in a first correlation which is a correlation of a first feature amount relating to temperature between regions that are different from each other; and third processing of performing an abnormality diagnosis of the device based on the change in the first correlation.

In order to solve the above-mentioned problem, according to one aspect of the present disclosure, there is provided a diagnostic device including: an infrared camera that captures a temperature image showing a temperature distribution of a device; and a processing device that performs first processing of setting a plurality of regions in the temperature image, second processing of identifying a change in a first correlation which is a correlation of a first feature amount relating to temperature between regions that are different from each other, and third processing of performing an abnormality diagnosis of the device based on the change in the first correlation.

### Advantageous Effects of Invention

According to the program, the diagnostic method, and the diagnostic device of the present disclosure, it is possible to accurately diagnose an abnormality in the device.

### Brief Description of Drawings

FIG. 1 is a schematic diagram for illustrating a general configuration of a diagnostic device according to an embodiment of the present disclosure.
FIG. 2 is a block diagram for illustrating an example of a function configuration of a processing device in the embodiment of the present disclosure.
FIG. 3 is a diagram for illustrating an example of a visible light image in the embodiment of the present disclosure.
FIG. 4 is a diagram for illustrating an example of a temperature image in the embodiment of the present disclosure.
FIG. 5 is a flowchart for illustrating an example of a flow of processing performed by the processing device in the embodiment of the present disclosure.
FIG. 6 is a table for showing an example of a reference dataset in the embodiment of the present disclosure.
FIG. 7 is a table for showing an example of a diagnostic target dataset in the embodiment of the present disclosure.
FIG. 8 is a table for showing an example of a reference dataset in a first modification example of the present disclosure.
FIG. 9 is a table for showing an example of a reference dataset in a second modification example of the present disclosure.

### Description of Embodiments

Now, with reference to the attached drawings, an embodiment of the present disclosure is described in detail. The dimensions, materials, and other specific numerical values represented in the embodiment are merely examples used for facilitating the understanding of the present disclosure, and do not limit the present disclosure otherwise particularly noted. Elements having substantially the same functions and configurations herein and in the drawings are denoted by the same reference symbols to omit redundant description thereof. Further, illustration of elements with no direct relationship with the present disclosure is omitted.

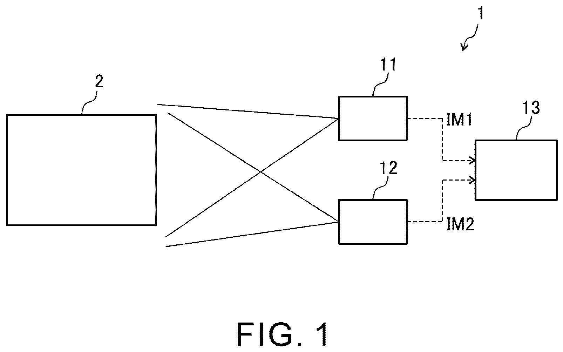

FIG. 1 is a schematic diagram for illustrating a general configuration of a diagnostic device 1 according to the embodiment of the present disclosure. The diagnostic device 1 performs an abnormality diagnosis of a device. In the example of FIG. 1, the diagnostic device 1 performs an abnormality diagnosis of an engine 2, which corresponds to an example of a device. However, the device to be diagnosed by the diagnostic device 1 is not limited to the engine 2.

As illustrated in FIG. 1, the diagnostic device 1 includes an infrared camera 11, a visible light camera 12, and a processing device 13.

The infrared camera 11 captures a temperature image. Specifically, the infrared camera 11 includes a plurality of image pickup elements that detect far-infrared rays emitted by an object. The image pickup elements detect the far-infrared rays, thereby capturing a temperature image. In the temperature image, a distribution of the radiation intensity of the far-infrared rays is shown as a temperature distribution. In this embodiment, the infrared camera 11 captures a temperature image IM1 which shows the temperature distribution of the engine 2. The obtained temperature image IM1 is output to the processing device 13.

The visible light camera 12 captures a visible light image. Specifically, the visible light camera 12 has a plurality of image pickup elements that detect visible light. The image pickup elements detect the visible light, thereby capturing a visible light image. In this embodiment, the visible light camera 12 captures a visible light image IM2 which shows the engine 2. The obtained visible light image IM2 is output to the processing device 13.

The processing device 13 performs various types of processing relating to the abnormality diagnosis of the engine 2. The processing device 13 includes, for example, a central processing unit (CPU), a ROM in which programs and the like are stored, and a RAM serving as a work area.

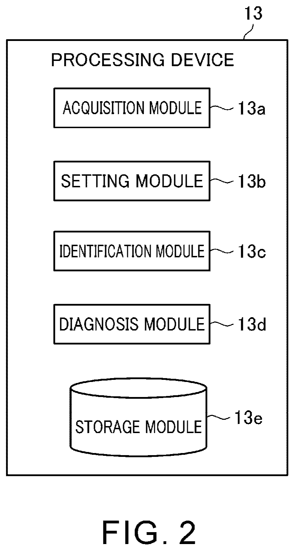

FIG. 2 is a block diagram for illustrating an example of a function configuration of the processing device 13 in the embodiment of the present disclosure. As illustrated in FIG. 2, the processing device 13 includes, for example, an acquisition module 13a, a setting module 13b, an identification module 13c, a diagnosis module 13d, and a storage module 13e. Each function of the processing device 13 described below is implemented by the central processing unit executing a program in the processing device 13. The functions of the processing device 13 described below may be implemented by one device, or may be shared among a plurality of devices.

The acquisition module 13a acquires various kinds of information. For example, the acquisition module 13a acquires information from the infrared camera 11, the visible light camera 12, and the storage module 13e.

The setting module 13b sets a plurality of regions in the temperature image IM1. As described later, in the abnormality diagnosis of the engine 2, a feature amount is calculated for each region in the temperature image IM1. An example of the feature amount is an average temperature value. Details of the feature amount are described later.

The identification module 13c identifies a change in a correlation between the feature amounts. An example of the correlation between the feature amounts is a correlation between the feature amounts of regions that are different from each other. Details of the correlation between the feature amounts are described later. The identification module 13c identifies a change in the correlation between the feature amounts compared to the correlation exhibited when the engine 2 is normal.

The diagnosis module 13d performs the abnormality diagnosis of the engine 2 based on the result of identifying a change in the correlation between the feature amounts by the identification module 13c. For example, the diagnosis module 13d diagnoses that an abnormality has occurred in the engine 2 when there is a large change in correlation between the feature amounts compared to the correlation exhibited when the engine 2 is normal. Details of the abnormality diagnosis are described later.

The storage module 13e stores various kinds of information. The information stored in the storage module 13e is used for various types of processing performed by the processing device 13.

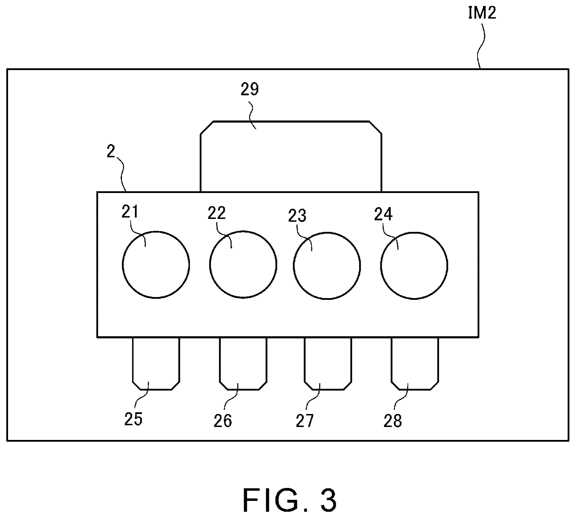

FIG. 3 is a diagram for illustrating an example of the visible light image IM2 in the embodiment of the present disclosure. As described above, the engine 2 is shown in the visible light image IM2. In FIG. 3, although not shown, brightness in the visible light image IM2 is indicated by shading, for example. In the example of FIG. 3, a cylinder 21, a cylinder 22, a cylinder 23, a cylinder 24, a pipe 25, a pipe 26, a pipe 27, a pipe 28, and a supercharger 29 are illustrated as the various parts of the engine 2. However, the configuration of the engine 2 is not limited to the example of FIG. 3.

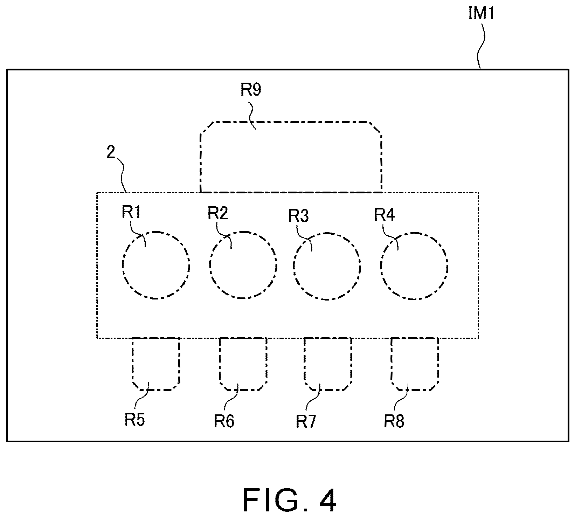

FIG. 4 is a diagram for illustrating an example of the temperature image IM1 in the embodiment of the present disclosure. As described above, the temperature image IM1 shows the temperature distribution of the engine 2. In FIG. 4, although not shown, temperature in the temperature image IM1 is indicated by shading, for example. In the example of FIG. 4, a region R1, a region R2, a region R3, a region R4, a region R5, a region R6, a region R7, a region R8, and a region R9 corresponding to the cylinder 21, the cylinder 22, the cylinder 23, the cylinder 24, the pipe 25, the pipe 26, the pipe 27, the pipe 28, and the supercharger 29, respectively, are set in the temperature image IM1. When the regions R1 to R9 are not particularly distinguished from one another, those regions are hereinafter simply also referred to as "regions R." Details of the processing for setting the regions R are described later.

Description of the processing performed by the processing device 13 is now given with reference to the examples of FIG. 3 and FIG. 4. However, the visible light image IM2 and the temperature image IM1 are not limited to the examples of FIG. 3 and FIG. 4. For example, the parts of the engine 2 shown in each image may be different from the parts shown in each image in the examples of FIG. 3 and FIG. 4. For example, some of the regions R1 to R9 set in the example of FIG. 4 may be omitted, and other regions R may be added.

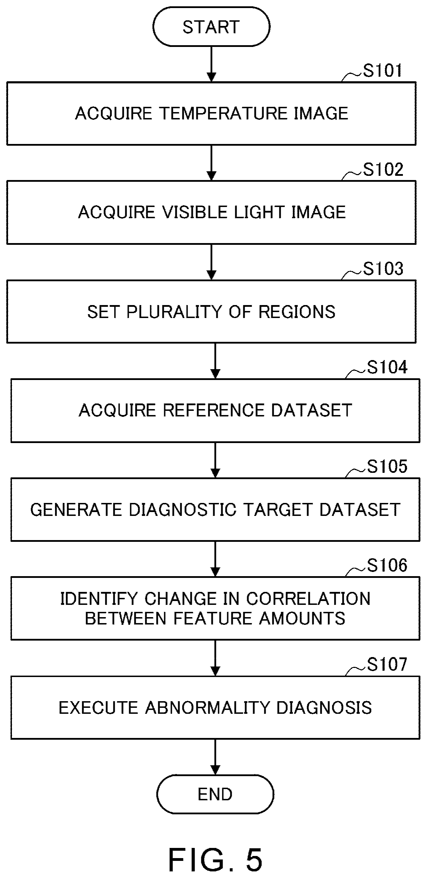

FIG. 5 is a flowchart for illustrating an example of a flow of processing performed by the processing device 13 in the embodiment of the present disclosure. The flow of processing illustrated in FIG. 5 is executed, for example, when a predetermined operation is performed by a user on the processing device 13.

When the flow of processing illustrated in FIG. 5 starts, in Step S101, the acquisition module 13a acquires the temperature image IM1 showing the temperature distribution of the engine 2 from the infrared camera 11. Following Step S101, in Step S102, the acquisition module 13a acquires the visible light image IM2 showing the engine 2 from the visible light camera 12.

Following Step S102, in Step S103, the setting module 13b sets a plurality of regions R in the temperature image IM1. Specifically, the setting module 13b sets a plurality of regions R in the temperature image IM1 based on the visible light image IM2.

The position of the infrared camera 11 and the position of the visible light camera 12 are different from each other. Therefore, the display position of the same part of the engine 2 is different between the temperature image IM1 and the visible light image IM2. The setting module 13b can estimate a positional relationship between the display positions of the same part of the engine 2 between the temperature image IM1 and the visible light image IM2 based on the positional relationship between the infrared camera 11 and the visible light camera 12. For example, information indicating the positional relationship between the infrared camera 11 and the visible light camera 12 is stored in advance in the storage module 13e.

The setting module 13b can determine which part of the engine 2 is present at which display position for the visible light camera 12, for example, by performing image processing such as edge detection on the visible light camera 12. Therefore, the setting module 13b can determine which part of the engine 2 is present at which display position in the temperature image IM1 based on the determination result regarding which part of the engine 2 is present at which display position for the visible light camera 12, and the estimation result of the positional relationship of the display positions of the same parts of the engine 2 between the temperature image IM1 and the visible light image IM2.

The setting module 13b can set the region R in which each part of the engine 2 is present in the temperature image IM1 based on the determination result regarding which part of the engine 2 is present at which display position in the temperature image IM1. In the example of FIG. 4, the setting module 13b sets the respective regions R in which the cylinder 21, the cylinder 22, the cylinder 23, the cylinder 24, the pipe 25, the pipe 26, the pipe 27, the pipe 28, and the supercharger 29 are present in the temperature image IM1 as the region R1, the region R2, the region R3, the region R4, the region R5, the region R6, the region R7, the region R8, and the region R9, respectively.

However, the setting module 13b may set a plurality of regions R in the temperature image IM1 without using the visible light image IM2. For example, when information indicating which part of the engine 2 is present at which display position in the temperature image IM1 is stored in advance in the storage module 13e, the setting module 13b can set a plurality of regions R in the temperature image IM1 by using that information without using the visible light image IM2. The setting module 13b may acquire the information indicating which part of the engine 2 is present at which display position in the temperature image IM1 based on the detection result of a sensor (for example, a LIDAR sensor) that can detect position information on each part of the engine 2.

Following Step S103 of FIG. 5, in Step S104, the identification module 13c acquires a reference dataset. The reference dataset is a dataset which includes the calculation result of the feature amount of each region R exhibited when the engine 2 is normal. The reference dataset is stored in advance in the storage module 13e.

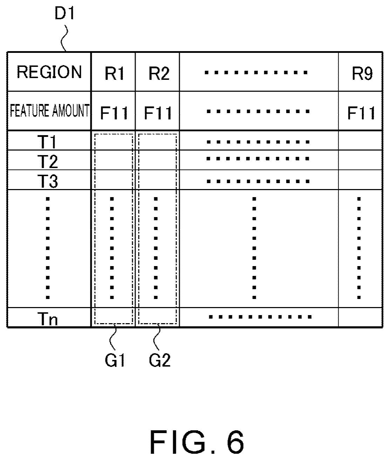

FIG. 6 is a table for showing an example of a reference dataset D1 in the embodiment of the present disclosure. The reference dataset D1 of FIG. 6 includes the calculation result of a first feature amount F11 of each region R at each time point T. The first feature amount F11 is a feature amount relating to temperature. Specifically, the first feature amount F11 is the average temperature value of each region R. The identification module 13c calculates the first feature amount F11 of each region R at each time point T based on the temperature image IM1 acquired at each time point T.

The identification module 13c calculates the first feature amount F11 of each region R at a time point T1. Next, the identification module 13c calculates the first feature amount F11 of each region R at a time point T2. Next, the identification module 13c calculates the first feature amount F11 of each region R at a time point T3. In this way, the identification module 13c calculates the first feature amount F11 of each region R for each of "n" time points T from the time point T1 to a time point Tn. In FIG. 6, the actually calculated value of the first feature amount F11 is not shown. However, at the same time point T, the value of the first feature amount F11 may be different for each region R.

Following Step S104 of FIG. 5, in Step S105, the identification module 13c generates a diagnostic target dataset. The diagnostic target dataset is a dataset in which the calculation result of the first feature amount F11 of each region R at the current time point is added to the reference dataset D1.

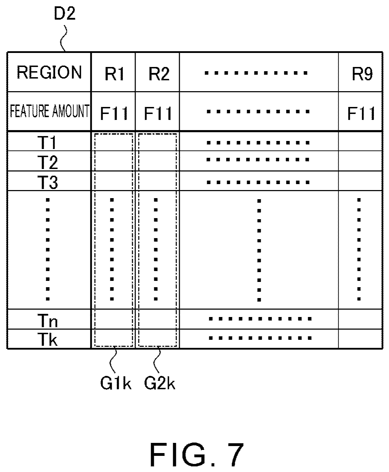

FIG. 7 is a table for showing an example of a diagnostic target dataset D2 in the embodiment of the present disclosure. In the diagnostic target dataset D2 of FIG. 7, the calculation result of the first feature amount F11 of each region R at a current time point Tk is added to the reference dataset D1 of FIG. 6. The identification module 13c calculates the first feature amount F11 of each region R at the current time point Tk based on the temperature image IM1 acquired in Step S101.

Following Step S105 of FIG. 5, in Step S106, the identification module 13c identifies a change in the correlation between the feature amounts. Specifically, the identification module 13c identifies a change in the correlation between the feature amounts compared to the correlation exhibited when the engine 2 is normal. More specifically, the identification module 13c identifies a change in the above-mentioned correlation based on the reference dataset D1 and the diagnostic target dataset D2.

In the examples of FIG. 6 and FIG. 7, the identification module 13c identifies a change in a first correlation, which is a correlation of the first feature amount F11 between regions R that are different from each other.

First, the identification module 13c calculates a probability density function of the first feature amount F11 of each region R in the reference dataset D1.

For example, the identification module 13c calculates the probability density function of the first feature amount F11 of the region R1 by using a data group G1 which includes "n" first feature amounts F11 of the region R1. In this case, the probability density function of the first feature amount F11 of the region R1 indicates the probability density of each value of the first feature amount F11 in the data group G1. Further, the identification module 13c calculates the probability density function of the first feature amount F11 of the region R2 by using a data group G2 which includes "n" first feature amounts F11 of the region R2. In this case, the probability density function of the first feature amount F11 of the region R2 indicates the probability density of each value of the first feature amount F11 in the data group G2. In the same way, the identification module 13c calculates the probability density function of the first feature amount F11 in the reference dataset D1 for each of the regions R3 to R9.

Next, the identification module 13c calculates a correlation coefficient of the first feature amount F11 between the region R1 and the region R2 in the reference dataset D1 based on the probability density function of the first feature amount F11 of the region R1 in the reference dataset D1 and the probability density function of the first feature amount F11 of the region R2 in the reference dataset D1. The correlation coefficient corresponds to an index indicating the strength of the correlation between the above-mentioned two probability density functions. The identification module 13c also calculates the correlation coefficient of the first feature amount F11 between two regions R in the reference dataset D1 for all pairs other than the pair consisting of the region R1 and the region R2 among the pairs of two regions R selectable from the regions R1 to R9. The correlation coefficients calculated in this manner correspond to the first correlation exhibited when the engine 2 is normal (that is, the correlation of the first feature amount F11 between different regions R).

Further, the identification module 13c calculates a probability density function of the first feature amount F11 of each region R in the diagnostic target dataset D2.

For example, the identification module 13c calculates the probability density function of the first feature amount F11 of the region R1 by using a data group G1k which includes n+1 first feature amounts F11 of the region R1. In this case, the probability density function of the first feature amount F11 of the region R1 indicates the probability density of each value of the first feature amount F11 in the data group G1k. Further, the identification module 13c calculates the probability density function of the first feature amount F11 of the region R2 by using a data group G2k which includes n+1 first feature amounts F11 of the region R2. In this case, the probability density function of the first feature amount F11 of the region R2 indicates the probability density of each value of the first feature amount F11 in the data group G2k. In the same way, the identification module 13c calculates the probability density function of the first feature amount F11 in the diagnostic target dataset D2 for each of the regions R3 to R9.

Next, the identification module 13c calculates a correlation coefficient of the first feature amount F11 between the region R1 and the region R2 in the diagnostic target dataset D2 based on the probability density function of the first feature amount F11 of the region R1 in the diagnostic target dataset D2 and the probability density function of the first feature amount F11 of the region R2 in the diagnostic target dataset D2. The correlation coefficient corresponds to an index indicating the strength of the correlation between the above-mentioned two probability density functions. The identification module 13c also calculates the correlation coefficient of the first feature amount F11 between two regions R in the diagnostic target dataset D2 for all pairs other than the pair consisting of the region R1 and the region R2 among the pairs of two regions R selectable from the regions R1 to R9. The correlation coefficients calculated in this manner correspond to the first correlation at the current time point Tk (that is, the correlation of the first feature amount F11 between different regions R).

Then, for each pair of two regions R, the identification module 13c calculates the difference between the correlation coefficient obtained by using the reference dataset D1 as described above and the correlation coefficient obtained by using the diagnostic target dataset D2 as described above. For example, for the pair consisting of the region R1 and the region R2, the identification module 13c calculates the difference between the correlation coefficient of the first feature amount F11 between the region R1 and the region R2 in the reference dataset D1 and the correlation coefficient of the first feature amount F11 between the region R1 and the region R2 in the diagnostic target dataset D2. The identification module 13c also calculates the difference between the correlation coefficient obtained by using the reference dataset D1 and the correlation coefficient obtained by using the diagnostic target dataset D2 for all pairs other than the pair consisting of the region R1 and the region R2 among the pairs of two regions R selectable from the regions R1 to R9. The difference calculated in this manner corresponds to an index indicating a change in the first correlation, which is the correlation of the first feature amount F11 between regions R that are different from each other.

Following Step S106 of FIG. 5, in Step S107, the diagnosis module 13d executes an abnormality diagnosis of the engine 2, and the processing flow illustrated in FIG. 5 ends.

In Step S107, the diagnosis module 13d performs the abnormality diagnosis of the engine 2 based on the change in the first correlation identified in Step S106. For example, among the pairs of two regions R selectable from the regions R1 to R9, when there is a pair in which the difference between the correlation coefficient obtained by using the reference dataset D1 and the correlation coefficient obtained by using the diagnostic target dataset D2 is equal to or more than a reference value, the diagnosis module 13d diagnoses that an abnormality has occurred in the engine 2. In this case, the diagnosis module 13d may diagnose what kind of abnormality has occurred in the engine 2 or where in the engine 2 the abnormality has occurred, based on which pair has the above-mentioned difference equal to or more than the reference value.

The diagnosis module 13d may calculate the difference between the correlation coefficient obtained by using the reference dataset D1 and the correlation coefficient obtained by using the diagnostic target dataset D2 between two regions R as an abnormality degree. In this case, the diagnosis module 13d may store information indicating the abnormality degree of each pair of two regions R selectable from the regions R1 to R9 in the storage module 13e. The information indicating the abnormality degree for each pair of two regions R may be calculated under a situation in which an abnormality is artificially generated in the engine 2, and the information may be stored in the storage module 13e. The information indicating the abnormality degree for each pair of two regions R is stored in the storage module 13e in association with, for example, information on what type of abnormality has occurred in the engine 2 or information on where in the engine 2 the abnormality has occurred. As a result, the diagnosis module 13d can appropriately diagnose what type of abnormality has occurred in the engine 2 or where in the engine 2 the abnormality has occurred by comparing the information indicating the abnormality degree for each pair of two regions R obtained at the current time point Tk with information indicating the abnormality degree for each pair of two regions R obtained in the past stored in the storage module 13e.

As described above, with the program, the diagnostic method, and the diagnostic device 1 according to the embodiment of the present disclosure, a computer (in the example described above, the processing device 13) performs first processing of setting a plurality of regions R in the temperature image IM1 showing a temperature distribution of a device (in the example described above, the engine 2), second processing of identifying a change in a first correlation which is a correlation of a first feature amount (in the example described above, the first feature amount F11) relating to temperature between regions R that are different from each other, and third processing of performing an abnormality diagnosis of the device based on the change in the first correlation. In the example described above, the setting module 13b performs the first processing, the identification module 13c performs the second processing, and the diagnosis module 13d performs the third processing. As a result, an abnormality in the device can be accurately diagnosed by focusing on how much a temperature relationship between respective parts in the device has changed compared to the normal state of the device.

Further, with the program, the diagnostic method, and the diagnostic device 1 according to the embodiment of the present disclosure, an abnormality in the device can be diagnosed more easily by visualizing the change in the first correlation, which is the correlation of the first feature amount F11 relating to temperature between regions R that are different from each other (in the example described above, the difference between the correlation coefficient obtained by using the reference dataset D1 and the correlation coefficient obtained by using the diagnostic target dataset D2).

Further, with the program, the diagnostic method, and the diagnostic device 1 according to the embodiment of the present disclosure, the diagnostic device 1 can be simplified compared to, for example, a method or the like of diagnosing an abnormality in a device by providing a temperature sensor for each part of the device. In addition, the diagnostic device 1 can be made less expensive than in the above-mentioned method or the like. Moreover, the diagnostic device 1 can be carried more easily than in the above-mentioned method or the like. Still further, compared to the above-mentioned method or the like, the degree of freedom regarding the installation location of the diagnostic device 1 can be improved.

In particular, with the program, the diagnostic method, and the diagnostic device 1 according to the embodiment of the present disclosure, in the first processing (specifically, the processing of setting the plurality of regions R in the temperature image IM1 showing the temperature distribution of the device), the plurality of regions R are set in the temperature image IM1 based on the visible light image IM2 in which the device is shown. As a result, the regions R can be set after which part of the device (in the example described above, the engine 2) is present at which display position in the temperature image IM1 is appropriately determined, and hence the plurality of regions R can be set more appropriately in the temperature image IM1.

The configuration and operation of the diagnostic device 1 have been described above with reference to FIG. 1 to FIG. 7. However, the configuration and operation of the diagnostic device 1 are not limited to the example described above.

For example, in the example described above, the diagnostic device 1 has one pair of the infrared camera 11 and the visible light camera 12. However, the diagnostic device 1 may have two or more pairs of the infrared camera 11 and the visible light camera 12. In this case, the abnormality diagnosis of the engine 2 can be performed over a wider range.

For example, in the example described above, the regions R set in the temperature image IM1 match the ranges in which each part of the engine 2 is present. However, the regions R set in the temperature image IM1 may include ranges in which the parts of the engine 2 are present and ranges in which the parts of the engine 2 are not present. Further, the regions R set in the temperature image IM1 may correspond to one pixel in the temperature image IM1. In this case, one region R is set for each pixel in the temperature image IM1.

For example, in the example described above, the average value of the temperature in each region R is used as the first feature amount F11. However, a feature amount other than the average value described above (for example, a variance of the temperature in each region R, which is described later) may be used as the first feature amount F11.

For example, in the example described above, in Step S106, the identification module 13c identifies the difference between the correlation coefficient obtained by using the reference dataset D1 and the correlation coefficient obtained by using the diagnostic target dataset D2 as the change in the first correlation, which is the correlation of the first feature amount F11 between regions R that are different from each other. However, in Step S106, the identification module 13c may identify a ratio between the correlation coefficient obtained by using the reference dataset D1 and the correlation coefficient obtained by using the diagnostic target dataset D2 as the change in the first correlation, which is the correlation of the first feature amount F11 between regions R that are different from each other.

For example, in the example described above, in Step S106, processing of calculating the correlation coefficient of the first feature amount F11 between two regions R in the reference dataset D1 and processing of calculating the correlation coefficient of the first feature amount F11 between two regions R in the diagnostic target dataset D2 are performed. However, the execution of those two processing steps may be omitted. For example, the identification module 13c may directly identify a change in the first correlation, which is the correlation of the first feature amount F11 between two regions R, for each of all of the pairs of two regions R that are selectable from the regions R1 to R9 based on the probability density function of the first feature amount F11 of each region R in the reference dataset D1 and the probability density function of the first feature amount F11 of each region R in the diagnostic target dataset D2. Such processing can be implemented, specifically, by using a known method called direct probability density-ratio estimation (see, for example, "Anomaly Detection and Change Detection (Machine Learning Professional Series)" by Tsuyoshi Ide and Masashi Sugiyama, published by Kodansha on August 8, 2015). Through the use of direct probability density-ratio estimation and omitting the above-mentioned two processing steps, the computational load can be reduced.

For example, in the example described above, in Step S106, processing of calculating the correlation coefficient of the first feature amount F11 between two regions R in the reference dataset D1 and processing of calculating the correlation coefficient of the first feature amount F11 between two regions R in the diagnostic target dataset D2 are performed. However, in those two processing steps, the identification module 13c may calculate a partial correlation coefficient instead of or in addition to the correlation coefficient. In this case, the identification module 13c can identify a difference or a ratio between the partial correlation coefficient obtained by using the reference dataset D1 and the partial correlation coefficient obtained by using the diagnostic target dataset D2 as the change in the first correlation, which is the correlation of the first feature amount F11 between regions R that are different from each other.

In the example described above, the first feature amount F11 is used as the feature amount in the abnormality diagnosis of the engine 2. However, another feature amount may be used in the abnormality diagnosis of the engine 2 in addition to the first feature amount F11. Description is now given of a first modification example and a second modification example, which are modification examples in which another feature amount is used in addition to the first feature amount F11.

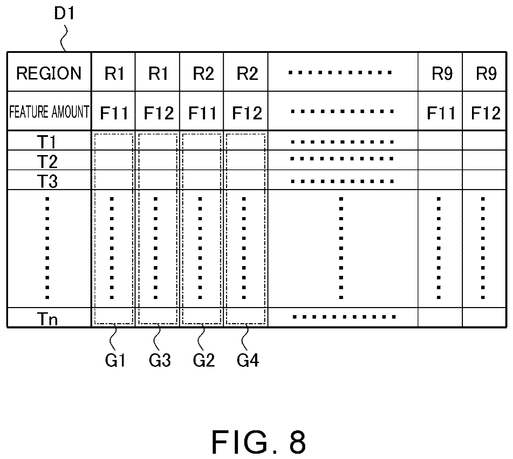

FIG. 8 is a table for showing an example of the reference dataset D1 in the first modification example of the present disclosure. In the reference dataset D1 of FIG. 8, in addition to the calculation result of the first feature amount F11 of each region R at each time point T, a calculation result of a first feature amount F12 of each region R at each time point T is also included. Similarly to the first feature amount F11, the first feature amount F12 is a feature amount relating to temperature. Specifically, the first feature amount F12 is the variance of the temperature in each region R. The identification module 13c calculates the first feature amount F12 of each region R at each time point T based on the temperature image IM1 acquired at each time point T. In FIG. 8, the actually calculated value of the first feature amount F12 is not shown. However, at the same time point T, the value of the first feature amount F12 may be different for each region R.

In the first modification example, the identification module 13c generates, as the diagnostic target dataset D2, a dataset in which the calculation result of the first feature amount F11 and the calculation result of the first feature amount F12 of each region R at the current time point Tk are added to the reference dataset D1 of FIG. 8. Then, in the first modification example, the identification module 13c identifies a change in the correlation between feature amounts based on the reference dataset D1 and the diagnostic target dataset D2 obtained as described above.

First, the identification module 13c calculates the probability density function of the first feature amount F11 of each region R in the reference dataset D1, as well as the probability density function of the first feature amount F12 of each region R in the reference dataset D1.

For example, the identification module 13c calculates the probability density function of the first feature amount F12 of the region R1 by using a data group G3 which includes "n" first feature amounts F12 of the region R1. In this case, the probability density function of the first feature amount F12 of the region R1 indicates the probability density of each value of the first feature amount F12 in the data group G3. Further, the identification module 13c calculates the probability density function of the first feature amount F12 of the region R2 in the reference dataset D1. Specifically, the identification module 13c identifies the probability density function of the first feature amount F12 of the region R2 by using a data group G4 which includes "n" first feature amounts F12 of the region R2. In this case, the probability density function of the first feature amount F12 of the region R2 indicates the probability density of each value of the first feature amount F12 in the data group G4. In the same way, the identification module 13c calculates the probability density function of the first feature amount F12 in the reference dataset D1 for each of the regions R3 to R9.

Next, the identification module 13c identifies the correlation for all combinations of data groups corresponding to each column for the reference dataset D1. That is, in the first modification example, the identification module 13c calculates, for the reference dataset D1, in addition to the correlation coefficient of the first feature amount F11 between the regions R that are different from each other, the correlation coefficient of the first feature amount F12 between the regions R that are different from each other, the correlation coefficient between the first feature amount F11 and the first feature amount F12 of the same region R, and the correlation coefficient between the first feature amount F11 and the first feature amount F12 corresponding to each of the regions R that are different from each other. The method of calculating the correlation coefficient of the first feature amount F12 between the regions R that are different from each other is the same as the above-mentioned method of calculating the correlation coefficient of the first feature amount F11 between the regions R that are different from each other.

For example, the identification module 13c calculates the correlation coefficient between the first feature amount F11 and the first feature amount F12 of the same region R1 in the reference dataset D1 based on the probability density function of the first feature amount F11 of the region R1 in the reference dataset D1 and the probability density function of the first feature amount F12 of the region R1 in the reference dataset D1. The correlation coefficient corresponds to an index indicating the strength of the correlation between the above-mentioned two probability density functions. The identification module 13c calculates the correlation coefficient between the first feature amount F11 and the first feature amount F12 of the same region R for each of the regions R2 to R9 as well.

For example, the identification module 13c calculates the correlation coefficient between the first feature amount F11 and the first feature amount F12 corresponding to each of the regions R1 and R2, which are different from each other, in the reference dataset D1 based on the probability density function of the first feature amount F11 of the region R1 in the reference dataset D1 and the probability density function of the first feature amount F12 of the region R2 in the reference dataset D1. The correlation coefficient corresponds to an index indicating the strength of the correlation between the above-mentioned two probability density functions. Further, the identification module 13c calculates the correlation coefficient between the first feature amount F11 and the first feature amount F12 corresponding to each of the regions R2 and R1, which are different from each other, in the reference dataset D1 based on the probability density function of the first feature amount F11 of the region R2 in the reference dataset D1 and the probability density function of the first feature amount F12 of the region R1 in the reference dataset D1. The correlation coefficient corresponds to an index indicating the strength of the correlation between the above-mentioned two probability density functions. The identification module 13c calculates the correlation coefficient between the first feature amount F11 and the first feature amount F12 corresponding to each of the regions R that are different from each other for all pairs as well other than the pair consisting of the region R1 and the region R2 among the pairs of two regions R selectable from the regions R1 to R9.

Further, the identification module 13c identifies the correlation for all combinations of data groups corresponding to each column for the diagnostic target dataset D2 as well in the same manner as for the reference dataset D1.

Further, among the various correlation coefficients obtained by using the reference dataset D1 as described above and the various correlation coefficients obtained by using the diagnostic target dataset D2 as described above, the identification module 13c calculates the difference between the correlation coefficients having the same comparison targets.

For example, the identification module 13c calculates the difference between the correlation coefficient of the first feature amount F11 between the region R1 and the region R2 in the reference dataset D1 and the correlation coefficient of the first feature amount F11 between the region R1 and the region R2 in the diagnostic target dataset D2. Further, the identification module 13c calculates the difference between the correlation coefficient of the first feature amount F12 between the region R1 and the region R2 in the reference dataset D1 and the correlation coefficient of the first feature amount F12 between the region R1 and the region R2 in the diagnostic target dataset D2. As described above, the difference calculated in this manner corresponds to an index indicating a change in the first correlation, which is the correlation of the first feature amount (specifically, the first feature amount F11 or the first feature amount F12) between regions R that are different from each other.

For example, the identification module 13c calculates the difference between the correlation coefficient of the first feature amount F11 and the first feature amount F12 of the same region R1 in the reference dataset D1 and the correlation coefficient of the first feature amount F11 and the first feature amount F12 of the same region R1 in the diagnostic target dataset D2. Further, the identification module 13c calculates the difference between the correlation coefficient of the first feature amount F11 and the first feature amount F12 corresponding to each of the regions R1 and R2, which are different from each other, in the reference dataset D1 and the correlation coefficient of the first feature amount F11 and the first feature amount F12 corresponding to each of the regions R1 and R2, which are different from each other, in the diagnostic target dataset D2. Those differences correspond to an index indicating a change in a second correlation, which is the correlation between the first feature amount F11 and the first feature amount F12 of the same region R, or the correlation between the first feature amount F11 and the first feature amount F12 each corresponding to a different region R.

In the first modification example, the diagnosis module 13d performs an abnormality diagnosis of the engine 2 based on the above-mentioned change in the second correlation in addition to the above-mentioned change in the first correlation. For example, in the first modification example, when there is a region R in which the difference between the correlation coefficient of the first feature amount F11 and the correlation coefficient of the first feature amount F12 of the same region R between the two datasets D1 and D2 is equal to or more than a reference value, the diagnosis module 13d diagnoses that an abnormality has occurred in the engine 2. Further, in the first modification example, when there is a pair of two regions R in which the difference between the correlation coefficient of the first feature amount F11 and the correlation coefficient of the first feature amount F12 that each correspond to a different region R between the two datasets D1 and D2 is equal to or more than a reference value, the diagnosis module 13d diagnoses that an abnormality has occurred in the engine 2. However, in place of the correlation difference, the identification module 13c may identify a correlation ratio as the index indicating the change in the second correlation.

As described above, in the first modification example, the first feature amounts F11 and F12 include a plurality of types of feature amounts, and the second processing (specifically, the processing of identifying a change in a first correlation which is a correlation of a first feature amount relating to temperature between regions R that are different from each other) includes further identifying, in addition to the change in the first correlation described above, a change in a second correlation which is a correlation between different types of the first feature amounts F11 and F12 of the same region R or a correlation between different types of the first feature amounts F11 and F12 each corresponding to a different region R, and the third processing (specifically, processing of performing an abnormality diagnosis of the device based on the change in the first correlation) includes performing the abnormality diagnosis based on the change in the second correlation in addition to the change in the first correlation. As a result, the abnormality diagnosis can be performed through use of a larger amount of information by focusing on the degree to which the temperature relationship between respective parts in the device (in the example described above, the engine 2) has changed compared to the normal state of the device, and hence an abnormality in the device can be diagnosed with higher accuracy.

In the example described above, the first feature amount F11, which is the average value of the temperature in each region R, and the first feature amount F12, which is the variance of the temperature in each region R, are used as a plurality of types of first feature amounts. However, the combination and number of types of first feature amounts used for the abnormality diagnosis are not limited to the example described above. For example, the maximum value of the temperature in each region R may be used as the first feature amount. For example, three or more types of the first feature amounts may be used.

In the example described above, processing of calculating various types of correlation coefficients between feature amounts is performed. However, even in the first modification example, the processing of calculating the correlation coefficient may be omitted by using direct probability density-ratio estimation. Further, even in the first modification example, the identification module 13c may calculate a partial correlation coefficient in place of or in addition to the correlation coefficient.

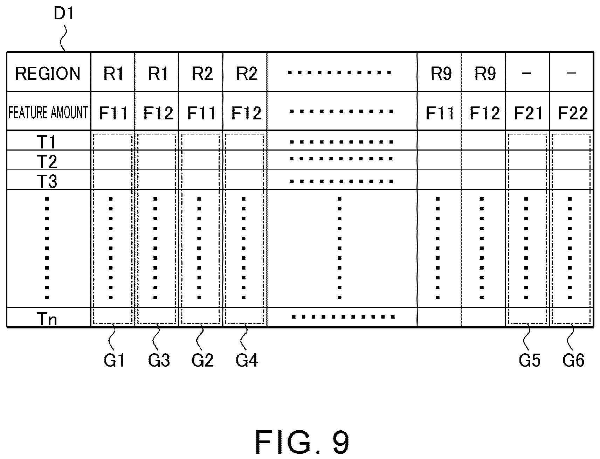

FIG. 9 is a table for showing an example of the reference dataset D1 in the second modification example of the present disclosure. The reference dataset D1 of FIG. 9 includes, in addition to the calculation result of the first feature amounts F11 and F12 for each region R at each time point T, the calculation result of second feature amounts F21 and F22 at each time point T. The second feature amounts F21 and F22 are feature amounts that are independent of the region R. In other words, the second feature amounts F21 and F22 are feature amounts that are independent of the position in the engine 2 and are common to each position.

Specifically, the second feature amount F21 is a feature amount relating to an operation state of the engine 2. Examples of the second feature amount F21 include the output and a revolution speed of the engine 2. The identification module 13c can acquire the output of the engine 2 at each time point T, for example, based on information acquired from a control device that controls the operation of the engine 2. The identification module 13c can also acquire the revolution speed of the engine 2 at each time point T, for example, based on the detection result of a sensor that detects the revolution speed of the engine 2.

The second feature amount F22 is a feature amount relating to the input and output of heat to and from the engine 2. Examples of the second feature amount F22 include the temperature around the engine 2, a coolant temperature, a lubricating oil temperature, a fuel temperature, an intake air temperature, a flow state of the surrounding air, and the temperature of a peripheral heat source. The identification module 13c can acquire those pieces of information at each time point T, for example, based on the detection results of sensors that detect the pieces of information. However, the identification module 13c may calculate each of the above-mentioned temperatures (for example, the temperature around the engine 2) at each time point T based on the temperature image IM1 acquired at each time point T.

In the second modification example, the identification module 13c generates, as the diagnostic target dataset D2, a dataset in which the calculation results of the first feature amounts F11 and F12 and the calculation results of the second feature amounts F21 and F22 of each region R at the current time point Tk are added to the reference dataset D1 of FIG. 9. Then, in the second modification example, the identification module 13c identifies a change in the correlation between feature amounts based on the reference dataset D1 and the diagnostic target dataset D2 obtained as described above.

First, the identification module 13c calculates the probability density functions of the first feature amounts F11 and F12 of each region R in the reference dataset D1, as well as the probability density functions of the second feature amounts F21 and F22 of each region R in the reference dataset D1.

For example, the identification module 13c calculates the probability density function of the second feature amount F21 by using a data group G5 which includes "n" second feature amounts F21. In this case, the probability density function of the second feature amount F21 indicates the probability density of each value of the second feature amount F21 in the data group G5. Further, the identification module 13c calculates the probability density function of the second feature amount F22 by using a data group G6 which includes "n" second feature amounts F22. In this case, the probability density function of the second feature amount F22 indicates the probability density of each value of the second feature amount F22 in the data group G6.

Next, the identification module 13c identifies the correlation for all combinations of data groups corresponding to each column for the reference dataset D1. In other words, in the second modification example, the identification module 13c identifies the correlation between the first feature amount (specifically, the first feature amount F11 or the first feature amount F12) and the second feature amount (specifically, the second feature amount F21 or the second feature amount F22) for the reference dataset D1 in addition to the correlation coefficient between the first feature amounts.

For example, the identification module 13c calculates the correlation coefficient between the first feature amount F11 and the second feature amount F21 of the region R1 in the reference dataset D1 based on the probability density function of the first feature amount F11 of the region R1 in the reference dataset D1 and the probability density function of the second feature amount F21 in the reference dataset D1. The identification module 13c calculates the correlation coefficient between the first feature amount F11 and the second feature amount F21 of each region R for each of the regions R2 to R9 as well.

For example, the identification module 13c calculates the correlation coefficient between the first feature amount F12 and the second feature amount F21 of the region R1 in the reference dataset D1 based on the probability density function of the first feature amount F12 of the region R1 in the reference dataset D1 and the probability density function of the second feature amount F21 in the reference dataset D1. The correlation coefficient corresponds to an index indicating the strength of the correlation between the above-mentioned two probability density functions. The identification module 13c calculates the correlation coefficient between the first feature amount F12 and the second feature amount F21 of each region R for each of the regions R2 to R9 as well.

For example, the identification module 13c calculates the correlation coefficient between the first feature amount F11 and the second feature amount F22 of the region R1 in the reference dataset D1 based on the probability density function of the first feature amount F11 of the region R1 in the reference dataset D1 and the probability density function of the second feature amount F22 in the reference dataset D1. The correlation coefficient corresponds to an index indicating the strength of the correlation between the above-mentioned two probability density functions. The identification module 13c calculates the correlation coefficient between the first feature amount F11 and the second feature amount F22 of each region R for each of the regions R2 to R9 as well.

For example, the identification module 13c calculates the correlation coefficient between the first feature amount F12 and the second feature amount F22 of the region R1 in the reference dataset D1 based on the probability density function of the first feature amount F12 of the region R1 in the reference dataset D1 and the probability density function of the second feature amount F22 in the reference dataset D1. The correlation coefficient corresponds to an index indicating the strength of the correlation between the above-mentioned two probability density functions. The identification module 13c calculates the correlation coefficient between the first feature amount F12 and the second feature amount F22 of each region R for each of the regions R2 to R9 as well.

Further, the identification module 13c identifies the correlation for all combinations of data groups corresponding to each column for the diagnostic target dataset D2 as well in the same manner as for the reference dataset D1.

Further, among the various correlation coefficients obtained by using the reference dataset D1 as described above and the various correlation coefficients obtained by using the diagnostic target dataset D2 as described above, the identification module 13c calculates the difference between the correlation coefficients having the same comparison targets.

For example, the identification module 13c calculates the difference between the correlation coefficient of the first feature amount F11 between the region R1 and the region R2 in the reference dataset D1 and the correlation coefficient of the first feature amount F11 between the region R1 and the region R2 in the diagnostic target dataset D2. Further, the identification module 13c calculates the difference between the correlation coefficient of the first feature amount F12 between the region R1 and the region R2 in the reference dataset D1 and the correlation coefficient of the first feature amount F12 between the region R1 and the region R2 in the diagnostic target dataset D2. As described above, the difference calculated in this manner corresponds to an index indicating a change in the first correlation, which is the correlation of the first feature amount (specifically, the first feature amount F11 or the first feature amount F12) between regions R that are different from each other.

For example, the identification module 13c calculates the difference between the correlation coefficient of the first feature amount F11 and the first feature amount F12 of the same region R1 in the reference dataset D1 and the correlation coefficient of the first feature amount F11 and the first feature amount F12 of the same region R1 in the diagnostic target dataset D2. Further, the identification module 13c calculates the difference between the correlation coefficient of the first feature amount F11 and the first feature amount F12 corresponding to each of the regions R1 and R2, which are different from each other, in the reference dataset D1 and the correlation coefficient of the first feature amount F11 and the first feature amount F12 corresponding to each of the regions R1 and R2, which are different from each other, in the diagnostic target dataset D2. Those differences calculated in this manner correspond to, as described above, an index indicating a change in the second correlation, which is the correlation between the first feature amount F11 and the first feature amount F12 of the same region R, or the correlation between the first feature amount F11 and the first feature amount F12 each corresponding to a different region R.

For example, the identification module 13c calculates the difference between the correlation coefficient between the first feature amount F11 and the second feature amount F21 of the region R1 in the reference dataset D1 and the correlation coefficient between the first feature amount F11 and the second feature amount F21 of the region R1 in the diagnostic target dataset D2. Further, the identification module 13c calculates the difference between the correlation coefficient between the first feature amount F12 and the second feature amount F21 of the region R1 in the reference dataset D1 and the correlation coefficient between the first feature amount F12 and the second feature amount F21 of the region R1 in the diagnostic target dataset D2. Further, the identification module 13c calculates the difference between the correlation coefficient between the first feature amount F11 and the second feature amount F22 of the region R1 in the reference dataset D1 and the correlation coefficient between the first feature amount F11 and the second feature amount F22 of the region R1 in the diagnostic target dataset D2. Further, the identification module 13c calculates the difference between the correlation coefficient between the first feature amount F12 and the second feature amount F22 of the region R1 in the reference dataset D1 and the correlation coefficient between the first feature amount F12 and the second feature amount F22 of the region R1 in the diagnostic target dataset D2. Those differences correspond to an index indicating a change in the third correlation, which is the correlation between the first feature amount and the second feature amount.

In the second modification example, the diagnosis module 13d performs an abnormality diagnosis of the engine 2 based on the above-mentioned change in the third correlation in addition to the above-mentioned change in the first correlation and the above-mentioned change in the second correlation. For example, in the second modification example, when there is a region R in which the difference between the correlation coefficient of the first feature amount (specifically, the first feature amount F11 or the first feature amount F12) and the second feature amount (specifically, the second feature amount F21 or the second feature amount F22) in any region R between the two datasets D1 and D2 is equal to or more than a reference value, the diagnosis module 13d diagnoses that an abnormality has occurred in the engine 2. However, in place of the correlation difference, the identification module 13c may identify a correlation ratio as the index indicating the above-mentioned change in the third correlation.

As described above, in the second modification example, the second processing (specifically, the processing of identifying a change in a first correlation which is a correlation of a first feature amount relating to temperature between regions R that are different from each other) includes further identifying, in addition to the above-mentioned change in the first correlation, a change in the third correlation which is a correlation between the first feature amount (in the example described above, the first feature amount F11 or the first feature amount F12) and the second feature amount that is independent of the region R (in the example described above, the second feature amount F21 or the second feature amount F22), and the third processing (specifically, the processing of performing an abnormality diagnosis of the device based on the change in the first correlation) includes performing the abnormality diagnosis based on the change in the third correlation in addition to the change in the first correlation. As a result, the abnormality diagnosis can be performed by, after focusing on the degree to which the temperature relationship between respective parts in the device (in the example described above, the engine 2) has changed compared to the normal state of the device, further taking into account the effect of the second feature amount on the temperature of each part in the device, and hence an abnormality in the device can be diagnosed with higher accuracy.

In particular, in the second modification example, the second feature amount includes a feature amount (in the example described above, the second feature amount F21) relating to the operation state of the device (in the example described above, the engine 2). As a result, it becomes possible to perform an abnormality diagnosis which takes into account the effect of the operation state of the device on the temperature of each part in the device, and hence a more accurate diagnosis of an abnormality in the device can be appropriately performed.

In particular, in the second modification example, the second feature amount includes a feature amount (in the example described above, the second feature amount F22) relating to the input and output of heat to and from the device (in the example described above, the engine 2). As a result, it becomes possible to perform an abnormality diagnosis which takes into account the effect of the state of input and output of heat to and from the device on the temperature of each part in the device, and hence a more accurate diagnosis of an abnormality in the device can be appropriately performed.

In the example described above, the change in the third correlation is identified in addition to the change in the first correlation and the change in the second correlation, and the abnormality diagnosis is performed based on those changes. However, in the example described above, the identification of the change in the second correlation may be omitted. For example, one of the first feature amount F11 and the first feature amount F12 may be omitted from the reference dataset D1 of FIG. 9, and there may be only one type of first feature amount.

In the example described above, processing of calculating various types of correlation coefficients between feature amounts is performed. However, even in the second modification example, the processing of calculating the correlation coefficient may be omitted by using direct probability density-ratio estimation. Further, even in the second modification example, the identification module 13c may calculate a partial correlation coefficient in place of or in addition to the correlation coefficient.

The embodiment has been described above with reference to the attached drawings, but, needless to say, the present disclosure is not limited to the embodiment described above. It is apparent that those skilled in the art may arrive at various alternations and modifications within the scope of claims, and those examples are construed as naturally falling within the technical scope of the present disclosure.

### Reference Signs List

1: diagnostic device 2: engine (device) 11: infrared camera 12: visible light camera 13: processing device 13a: acquisition module 13b: setting module 13c: identification module 13d: diagnosis module 13e: storage module F11: first feature amount F12: first feature amount F21: second feature amount F22: second feature amount IM1: temperature image IM2: visible light image R1: region R2: region R3: region R4: region R5: region R6: region R7: region R8: region R9: region

## Claims

1. A program for causing a computer to perform:
first processing of setting a plurality of regions in a temperature image showing a temperature distribution of a device;
second processing of identifying a change in a first correlation which is a correlation of a first feature amount relating to temperature between regions that are different from each other; and
third processing of performing an abnormality diagnosis of the device based on the change in the first correlation.

2. The program according to claim 1,
wherein the first feature amount includes a plurality of types of feature amounts,
wherein the second processing includes further identifying, in addition to the change in the first correlation, a change in a second correlation which is a correlation between different types of the first feature amount of the same region or a correlation between different types of the first feature amount each corresponding to a different region, and
wherein the third processing includes performing the abnormality diagnosis based on the change in the second correlation in addition to the change in the first correlation.

3. The program according to claim 1 or 2,
wherein the second processing includes further identifying, in addition to the change in the first correlation, a change in a third correlation which is a correlation between the first feature amount and a second feature amount that is independent of the regions, and
wherein the third processing includes performing the abnormality diagnosis based on the change in the third correlation in addition to the change in the first correlation.

4. The program according to claim 3, wherein the second feature amount includes a feature amount relating to an operation state of the device.

5. The program according to claim 3, wherein the second feature amount includes a feature amount relating to input and output of heat to and from the device.

6. The program according to claim 1 or 2, wherein the first processing includes setting a plurality of the regions in the temperature image based on a visible light image in which the device is shown.

7. A diagnostic method, comprising performing, by a computer:
first processing of setting a plurality of regions in a temperature image showing a temperature distribution of a device;
second processing of identifying a change in a first correlation which is a correlation of a first feature amount relating to temperature between regions that are different from each other; and
third processing of performing an abnormality diagnosis of the device based on the change in the first correlation.

8. A diagnostic device, comprising:
an infrared camera that captures a temperature image showing a temperature distribution of a device; and
a processing device that performs first processing of setting a plurality of regions in the temperature image, second processing of identifying a change in a first correlation which is a correlation of a first feature amount relating to temperature between regions that are different from each other, and third processing of performing an abnormality diagnosis of the device based on the change in the first correlation.
